# EUROPEAN PATENT APPLICATION

(11) **EP 0 675 498 A2**
(43) Date of publication of application: **04.10.1995**
(21) Application number: 95500039.3
(22) Date of filing: 30.03.1995
(51) Int. Cl.: G11B 33/04, G11B 23/023

(54) **Automatic modular filing box for audio and video cassettes, compact discs and similar**

(30) Priority: 30.03.1994 ES 9400703
(71) Applicant: SALARO, S.A., E-08191 Rubi (Barcelona) (ES)
(72) Inventor: Sanclemente Sanchez, Jorge, E-08191 Rubi (Barcelona) (ES); Sanchez Moreno, Jesus, E-08191 Rubi (Barcelona) (ES)
(74) Representative: Carpintero Lopez, Francisco

(57) **Abstract**

The modular filing box is made up of a series of modules (2), superimposedly coupled one with another, each module designating a housing for a small box (3) which is displaceable for its concealment inside the module or for appearing on the outside, according to a suitably guided sliding of this small box (3), in colaboration with a thrust spring (10). The assembly of the small box (3) as regards the constitutive housing of the module is such, that when driving on a front push button (8) in the concealed position, the release of the small box (3) is produced together with the corresponding thrust by the spring (10) towards the outside, simultaneously producing, at the position of maximum extraction of said small box (3), the upward oscillation of the cover (4), leaving the case (5) the container of the disc or of the cassette (6), perfectly accessible.

## Description

### PURPOSE OF THE INVENTION

The invention refers to an automatic modular filing box for audio and video cassettes, as well as for compact discs and similar, with structural characteristics which allow the ordered and protected storage of cassettes and compact discs, allowing the automatic extraction of said elements, by the simple driving of a push button which not only ejects the container case of the cassette or disc but also opens the cover of said case so as to gain access to and obtain, the cassette or disc for its corresponding audition.

### BACKGROUND OF THE INVENTION

The types of filing boxes for audio and video cassettes as well as for compact discs which are known, are numerous in number, having innumerable solutions for containing and storing these types of objects.

In this sense mention may be made to filing boxes with simple housings in which the discs are manually inserted and extracted.

There additionally exist, filing boxes which include on their bottom, a spring which tends to eject the discs or cassettes outwards. In other words, that in this type of filing boxes the cassettes or discs are inserted in the corresponding housing against the stress of a spring up to a limit tiedown position with a trigger, in such a way that the ejection or extraction of the cassette or disc is carried out automatically by means of the action of the spring, when the trigger is released.

There also exist filing boxes which are much more developed than those previously referenced, which being modular such as those above, present the particularity that each housing contains a small box in which the correspoinding case is in turn attached, with the particularity that the cover of the small box may be opened when it is extracted as regards the housing, performing the extraction up to a limit, in other words, without detachment from the filing box, at the same time that the opening of this cover of the small box involves the aperture of the case cover.

In this case, what is inserted and extracted from each housing is not precisly the disc itself, but a small box equipped with oscillating cover, and to which is attached to the small box, the body of the disc case or cassette, including its cover which is attached to the cover of the small box, in such a way that when the small box is automatically ejected by coventional means, the cover may be manually lifted, and simultaneously to the aperture of the small box, the aperture of the disc case is produced, directly extracting the disc from the assembly, instead of extracting the complete case and leaving it free while the audition lasts.

In this sense mention may be made to the Spanish Patent of Invention No. 547.180, which claims a storage apparatus of recording means for tapes or discs which being based on a similar structure to the one disclosed, presents retention means of the actual small box, together with means for conducting the opening of the small box and consequently of the case, these latter means being based on tabs.

In any case, even with the existance of filing boxes which contain housings in which small boxes are slidably placed in insertion and ejection direction, said small boxes remaining retained in the extraction position, that is to say, linked to the actual filing box, and in which said small box the case is attached, in such a way that its body is fixed to the body of the small box, and its cover, to that of the actual box of the small box, therefore, when the latter opens the aperture of the actual case is likewise effected, as has been previously described. It has been said that all the above is in itself known, though on which the inter-attachment means of the case and the small box are not the most advisable, and what is most important, the opening of the small box and in consequence of the case, must be manually carried out, with the consequent problems and disadvantages involved.

### DESCRIPTION OF THE INVENTION

The recommended filing box has been conceived to offer the market and public in general a series of services not provided for in any of the filing boxes known up to the present.

More specifically, the filing box of the invention, being of the mudular type which include a slideable small box in each housing, and in whose small box a container case for the disc or cassette is attached, presents as one of its original characteristics retention means of the actual small box and consequently of the case in storage position, in other words, in the withdrawal or concealment position of the actual disc, these blocking or retention means being based on the actual push button, the driving of which involves the automatic extraction of the small box and consequently, of the disc or cassette case.

Another original characteristic consists in the attachment of the case to the small box by means of lands on the front edge of the same, which determines a step accurately retaining the upper edge of the body of the case, whilst its cover remains retained due to the fact that it is equipped with lateral orifices, in which are housed small projections internally provided on the lateral sides of the actual small box.

Yet another original characteristic consists in the fact that the articulation or rotation axis of the small box, and in consequence, of the case, is equipped with automatic opening means once the small box is extracted, these automatic opening means being based on helicoidal springs, each projecting into branches at their ends, one abutting on the cover of the small box and the other on the body of the same, which gives rise, at the moment of extraction of said small box, to the spring tending to open the cover, pushing upwards and involving the opening of the corresponding case.

One final original characteristic consists in the actual thrust spring of the small box towards the extraction position, said spring being based on a strong helicoidal wire assembled on a rigid pivot on the rear and interior part of the housing, abutting, by means of one of the branches, on the rear face of the small box, and on the other, on the actual rear face of the housing, determining that this robust spring, thrusts the small box with complete efficacy outwards and consequently the container case of the disc or cassette.

### DESCRIPTION OF THE DRAWINGS

In order to complement the description offered, and with the object of facilitating a better understanding of the characteristics of the invenction, the present descriptive specification is enclosed, as an integral part of the same, with a set of drawings in which the following has been represented with illustrative and non-limitative character:

Figure 1 illustrates a representation according to a general perspective view of a filing box determined by two inter-coupled modules, one empty and the other containing a small box with the correspoonding disc container case, all this in closed or retracted position.

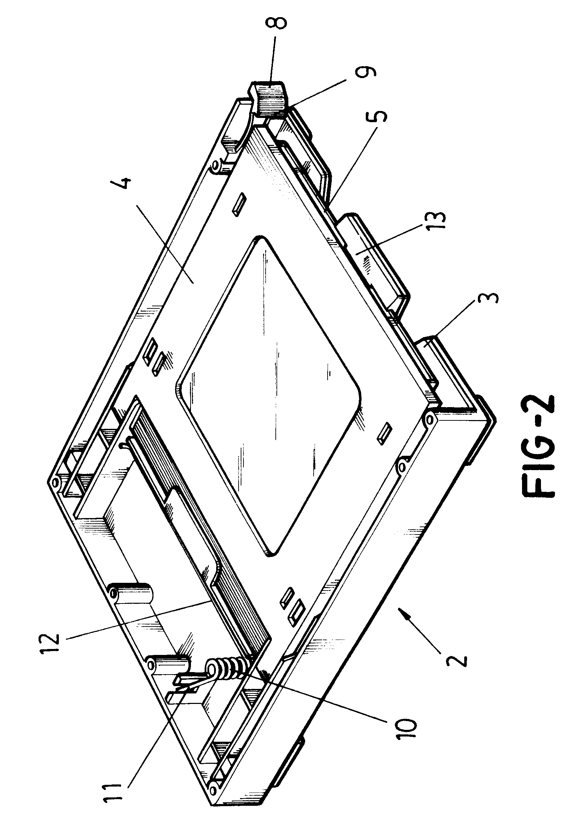

Figure 2 illustrates another representation, also in perspective view of the filing box, lacking the empty module which was represented from above in the previous figure, leaving on view, the robust thrust spring of the small box toward the outside, though it remains retained in its rest position.

Figure 3 illustrates a perspective view of the small box ejected towards the outside, with the cover open and consequently with the disc container case similarly open.

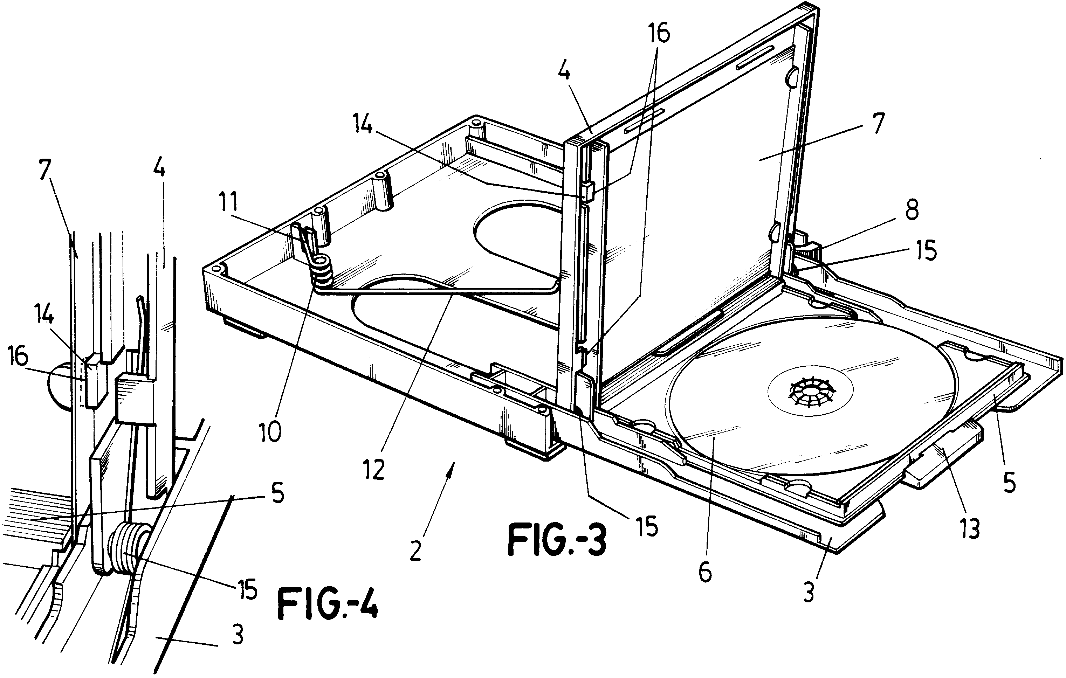

Figure 4 finally illustrates, a detailed view of the automatic aperture means of the cover pertaining to the small box and consequently, of the case, as well as the inter-attachment means of both covers of the case and small box.

### PREFERED EMBODIMENT OF THE INVENTION

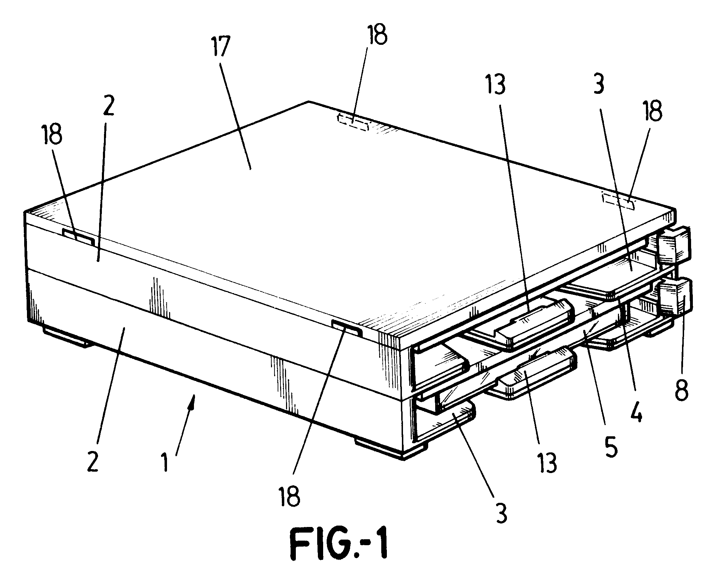

As may be observed from the referenced figures, the filing box 81) of the invention, according to figure 1, is materialized based on a series of modules (2) superimposedly coupled with one another, allowing whatever amount of them is desired, in such a way that in this figure 1 two modules have been represented, each one of them defining a housing for a box (3) equipped with a body of a small box, corresponding with the actual reference (3) and a cover (4), in such a way that to the body of the small box (3) attached the body (5) of the disc or cassette container case (6), said case being equipped with its corresponding cover.

Thus, this small box assembly (3) and case (5), which forms one single body, since they are interlinked as has been previoulsy specified, and as shall be subsequently described, is slideable inside the housing which defines each module (2), in such a way that it is equipped on its front part and in correspondance with one of its lateral zones, with a push button (8), equipped with an internal and lateral projection (9).

On the other hand, the small box (3) with its corresponding case (5) are constantly thrust outwards by means of a robust spring (10), formed by a helicoidal wire assembled on a vertical pivot, said spring having two branches, a short one, abutting on the internal and rear face of the housing which constitutes the module, said branch being referenced with number (11), whilst the other branch, referenced with number (12), is of greater length and abuts on the rear face of the small box (3), tending to thrust constantly outwards as regards the small box.

On the other hand, provision is made for the body of the case (5) to be retained in the body of the small box (3) by means of a land (13), whilst the cover (7) of said case (5) remains retained on the internal face of the face (4) of the small box (3) by means of lateral lands (14) of the cover (4) of the small box (3), said lands (14) being housed in orifices (16) provided to that effect on the actual lateral sides of the cover (7) of the case (5), remaining thus retained or attached said latter cover to the cover (4) of the small box, with which, when the body of the case (5) remains attached to the body of the small box (3), and the cover of the former to the cover of the latter, each time that the small box (3) is displaced, it displaces the case (5), and each time the cover (4) of said small box (3) is opened, the cover (7) of the case (5) shall similarly be opened.

Thus, the cover (4) of the small box, and consequently of the cover (7) of the case, are constantly required to move towards a thrust position, in other words, they tend to open, by means of a couple of helicoidal springs (15) provided in correspondance with the end pivots pertaining to the pivoting axis of the actual cover (4), each of the springs presenting end branches, one abutting on the cover and the other abutting on the base or body of the small box, keeping the cover (4) thrust against the small box (3), in such a way that when said small box is inserted in the housing of the module (2), logically, the cover shall remain closed, though, when the small box (3) is ejected, logically, at the moment of exit, the aperture of the corresponding cover (4) shall be produced, and consequently of the cover (7) of the case (5), leaving free access to take the disc or cassette (6).

As has been previously expounded, the retention of the small box (3) and consequently of the case (5) inside the module (2), is carried out by the projection (9) of the push button (8), against which the front edge of the small box (3) stops.

Thus, if said push button (8) is pressed toward a lateral side, then the projection (9) of the same is displaced, freeing the front edge of the small box (3), ejecting the same immediatly and with force towards the outside by means of spring (10), until the maximum extraction limit is reached, this limit being determined by conventional stops, and at which moment, the cover (4) opens by the effect of the springs (15) and consequently the cover (7) of the case (5) also opens, in order to extract, or else insert in the pertinent circumstances, the disc or cassete as regards said case.

Finally, it must be pointed out that the cover (17) of the upper block or module (2), is equipped with grooves (18) near its corners, facilitating the partial entrance of a suitable tool, as may be the edge of a coin, in order to help free said cover (17) as regards the module (2) and allow the lay-up of another upper module.

## Claims

1. An automatic modular filing box for audio and video cassettes, compact discs and similar, which being constituted by one or more intercoupled modules, each one of which determines a housing for a displaceable small box in its interior, a case for carrying an applicable disc or cassete being internally attached to said small box, said respective module being equipped with thrust means of the small box and consequently of the case for its extraction without unlinking from the actual module, as well as retention means of said small box and case, inside the module, the small box being constantly thrust outwards by a spring provided between the bottom of the housing corresponding to the module and the rear part of the small box, characterized in that in correspondance with the pivoting axis of the cover of the small box with the corresponding body, lateral helicoidal springs have been provided for each with their ends projected towards respective branches, one abutting on the internal face of the cover and the other abutting on the internal body of the face, determining a constant thrust towards the aperture position of the cover as regards the body of the small box, and consequently of the cover of the case linked to this cover of the case.

2. An automatic modular filing box for audio and video cassettes, compact discs and similar, according to claim 1, characterized in that the body of the case is retained on the body of the small box by means of a front projection of the same which engages on a front edge of the actual body of the case, whilst the cover of said case remains internally attached to the cover of the small box by means of lateral internal projections of the latter cover which is housed in orifices provided to that effect on the lateral sides of the actual cover of the case.

3. An automatic modular filing box for audio and video cassettes, compact discs and similar, according to the previous claims, characterized in that the thrust spring of the small box towards the extraction position is materialized by a thick helicoidal wire assembled on a vertical pivot provided on the internal part of the module, said spring being equipped with two branches, one of greater length which abuts and thrusts on the rear face of the small box and the other which abuts on the internal face of the rear wall of the module.

4. An automatic modular filing box for audio and video cassettes, compact discs and similar, according to the previous claims, characterized in that the retention means of the small box and consequently of the case inside the module, are materialized by an internal lateral projection which forms part of the driving push button for the unblockage and corresponding ejection of the small box, said projection, against which the front edge of said small box stops to maintain the same in the retraction position inside the module.
